Europäisches Patentamt

European Patent Office

Office européen des brevets

(11) Veröffentlichungsnummer: **0 308 413**
**B1**

(12) EUROPÄISCHE PATENTSCHRIFT

(45) Veröffentlichungstag der Patentschrift: **12.09.90**

(21) Anmeldenummer: **87903696.0**

(22) Anmeldetag: **01.06.87**

(86) Internationale Anmeldenummer:
**PCT/EP87/00282**

(87) Internationale Veröffentlichungsnummer:
**WO 87/07713 17.12.87 Gazette 87/28**

(51) Int. Cl.⁵: **G 01 C 9/12, G 01 C 9/06**

(54) WINKELMESSGERÄT.

(30) Priorität: **04.06.86 DE 3618808**

(43) Veröffentlichungstag der Anmeldung:
**29.03.89 Patentblatt 89/13**

(45) Bekanntmachung des Hinweises auf die
Patenterteilung:
**12.09.90 Patentblatt 90/37**

(84) Benannte Vertragsstaaten:
**AT CH DE FR GB IT LI NL**

(56) Entgegenhaltungen:
**DE-C- 749 841**
**GB-A- 617 785**
**US-A-3 861 052**

(73) Patentinhaber: **Winter, Rolf**
**Pullacher Strasse 10**
**D-8221 Seebruck/Chiemsee (DE)**

(72) Erfinder: **Winter, Rolf**
**Pullacher Strasse 10**
**D-8221 Seebruck/Chiemsee (DE)**

(74) Vertreter: **Flach, Dieter Rolf Paul, Dipl.-Phys.**
**et al**
**Patentanwälte Andrae/Flach/Haug/Kneissl**
**Prinzregentenstrasse 24**
**D-8200 Rosenheim (DE)**

Courier Press, Leamington Spa, England.

**Beschreibung**

Die Erfindung betrifft ein Winkelmeßgerät, insbesondere zur Einstellung einer Horizontal- bzw. Vertikallage nach dem Oberbegriff des Anspruches 1.

Zur Einstellung einer exakten Horizontal- bzw. Vertikallage werden traditionellerweise eine Wasserwaage mit Libelle oder aber vor allem beim Bau ein Lot verwandt. Die Handhabung eines derartigen Pendellots scheidet in der Regel aber, insbesondere bei Baumaßnahmen im Innenraum, beim Aufstellen von Möbeln etc. wegen der ychlechteren Handhabbarkeit aus.

Eine elektrische Wasserwaage ist beispielsweise aus der DE—A—24 19 787 bekannt geworden. Sie umfaßt ein zentrisch aufgehängtes Pendel mit Zeiger. In einem verstellbaren mit einer Meßkarre versehenen Meßring kann ein Winkel oder eine Horizontallage eingestellt werden. Sowohl das aus einem Meßring bestehende Meßgerät wie auch der Pendelzeiger sind jeweils mit einem Pol einer Batterie verbunden. Bei Erreichen der entsprechenden Winkellage berühren sich die Kontakte, so daß ein optisches und/oder akustisches Signal abgegeben wird. Die Handhabung und die Genauigkeit dieses Gerätes ist aber nicht optimal.

Da die nicht näher gezeigten Kontakte in der Praxis sich immer überlappen müssen, werden hierdurch Fehler bei einer exakten Winkelmessung oder Winkeleinstellung erzielt. Darüber hinaus läßt sich nicht ohne weiteres feststellen, in welche Richtung eine angelegte Wasserwaage verstellt werden muß, um eine eingestellt Winkellage oder beispielsweise eine Horizontallage einzunehmen.

Ein Winkelmeßgerät ist ferner aus der US—A—3 861 052 bekannt geworden. Dieses Winkelmeßgerät umfaßt einen mit dem Pol einer Batterie verbundenes Pendel, welches mit zwei beidseitig des Pendels liegenden Kontaktstellen in Wechselwirkung treten kann, wobei in Abhängigkeit der Berührung des Pendels mit dem jeweils einen oder anderen Kontakt eine jeweils zugeordnete Lampe aufleuchtet. Steht das Pendel mit keinem der beiden Kontakte in Berührung, so leuchtet eine Zentrumslampe auf, die andeutet, daß das Winkelmeßgerät sich in der vorgewählten Winkellage befindet. Der Aufbau dieses Winkelmeßgerätes ist aber äußerst kompliziert. Nicht nur der mechanische Teil umfaßt eine Vielzahl von zusammenwirkenden notwendigen Teilen, sondern vor allem auch der elektrische Schaltteil erfordert einen sieben Transistoren umfassenden Schaltkreis mit einer Vielzahl von Widerständen, um eine entsprechende optische Signalkennung an den drei vorgesehenen Signallampen durchzuführen. Vor allem aber ist eine Einstellung der Meßgenauigkeit bei diesem vorbekannten Winkelmeßgerät nicht möglich, so daß mögliche Toleranzen und Fehler relativ groß sein können, ohne hier eine Einstellung vornehmen zu können.

Aufgabe der vorliegenden Erfindung ist von daher, die Nachteile nach dem Stand der Technik zu überwinden und ein Winkelmeßgerät zu schaffen, bei welchem mit einfachen Mitteln zusätzlich auch die Meßgenauigkeit beliebig veränderbar und einstellbar ist, wodurch die Handhabung des Meßgerätes insgesamt weiter verbessert wird.

Die Aufgabe wird erfindungsgemäß entsprechend den im Anspruch 1 angegebenen Merkmalen gelöst. Vorteilhafte Ausgestaltungen der Erfindung sind in den abhängigen Ansprüchen angegeben.

Durch die vorliegende Erfindung wird ein viele Vorteile aufweisendes elektrisches Winkelmeßgerät nach Art einer "elektrischen Wasserwaage" geschaffen, welches äußerst genau arbeitet und leicht handhabbar ist. Dabei kann problemlos und schnell die Meßgenauigkeit entsprechend den Anfordernissen verändert und eingeregelt werden.

Da das elektrische Winkelmeßgerät mit relativ kleinen Abmessungen gebaut werden kann und zudem mit einer elektrischen Anzeigeeinrichtung versehen ist, kann dieses Winkelmeßgerät auch in schwer zugänglichen Nischen, vor allem auch bei schlechter Beleuchtung problemlos eingesetzt werden. Das erfindungsgemäße elektrische Winkelmeßgerät umfaßt dabei ein unter den Gravitationseinwirkungen selbsttätig sich ausrichtendes Ausrichtglied, in der Regel nach Art eines Pendels, Möglich wären aber ebenso beispielsweise horizontal nach Art eines Waagebalkens oder nach Art eines auf einer Flüssigkeit ruhenden Schwimmers, der jeweils mit zwei Kontakten in Wechselwirkung treten kann. In der Neutrallage des Winkelmeßgerätes bei entsprechend richtig eingestelltem Winkel bzw. bei vorgewähltem Winkel entsprechend korrekter Ausrichtung einer Referenzfläche, steht das Ausrichtglied nicht in Wechselwirkung mit zwei Kontakten, so daß keine der beiden elektrischen Anzeigeeinrichtungen aufleuchtet. Bei entsprechend nicht korrekt justiertem bzw. eingestelltem Winkel wird das Ausrichtglied unter der Schwerkraft in einem vorgegebenen begrenzten Bereich leicht verschwenkt und tritt mit dem einen oder anderen Kontakt in Wechselwirkung, so daß jeweils eine der beiden Anzeigeeinrichtungen aufleuchtet. Dadurch wird dem Benutzer signalisiert, in welcher Richtung das Gerät verschwenkt werden muß, um die gewünschte Winkellage an der Referenzmeßfläche einzustellen. Bei vorgegebener Anlage der Referenzmeßfläche an einer zu messenden Ebene oder Schräge kann ferner durch Verdrehen des Meßgeräteteiles der exakte Winkel gegenüber der Horizontalen oder Vertikalen abgelesen werden.

Eine leichte veränderte Einstellung der Meßgenauigkeit kann in einer Weiterbildung gemäß Anspruch 2 und 3 durch Verwendung eines Konusses erfolgen. Dabei kann der am Ausrichtglied ausgebildete Konus als Kontaktglied wirken, über welches der Abstand zu dem jeweiligen anderen Kontaktglied zur Herstellung einer elektrischen Verbindung zur Betätigung der elektrischen Anzeigeeinrichtung einstellbar ist.

Eine einfache Anzeigeeinrichtung besteht in einer Weiterbildung der Erfindung nach Anspruch 6 aus zwei jeweils zwischen den mit dem Ausrichtglied in Verbindung stehenden Kontaktgliedern und einer zugehörigen Energiequelle in Reihe geschalteten Lampen in Form von Luminiszenzdioden LED's, die mit geringere Spannung betreibbar sind.

Um beispielsweise das erfindungsgemäße Gerät mit seiner Anlagereferenzfläche auch bei geeigten Dachstühlen verwenden zu können, ist beispielsweise zur Ausrichtung längs einer horizontalen Höhenlinie an der geneigten Dachschräge die Anlagereferenzfläche gemäß Anspruch 7 um eine parallel zur Meßrichtung verlaufende Kippachse verschwenkbar.

Besonders bevorzugte Ausführungsformen der Erfindung sind in den Ansprüchen 8 bis 18 wiedergegebenen. Dabei kann gemäß Anspruch 11 auch noch eine Dämpfungseinrichtung vorgesehen sein, um möglichst schnell eine exakte Winkelablesung oder Justierung zu ermöglichen.

Weitere Vorteile der Erfindung ergeben sich nachfolgend aus den anhand von Zeichnungen dargestellten Ausführungsbeispielen. Dabei zeigen im einzelnen:

Figur 1: eine Vorderansicht eines Winkelmeßgerätes in schematisch gezeigter elektrischer Verdrahtung;

Figur 2: eine Stirnseitenansicht einer Abwandlung zu Figur 1;

Figur 3: ein weiteres Ausführungsbeispiel in perspektivischer Ansicht;

Figur 4: einen Schaltplan.

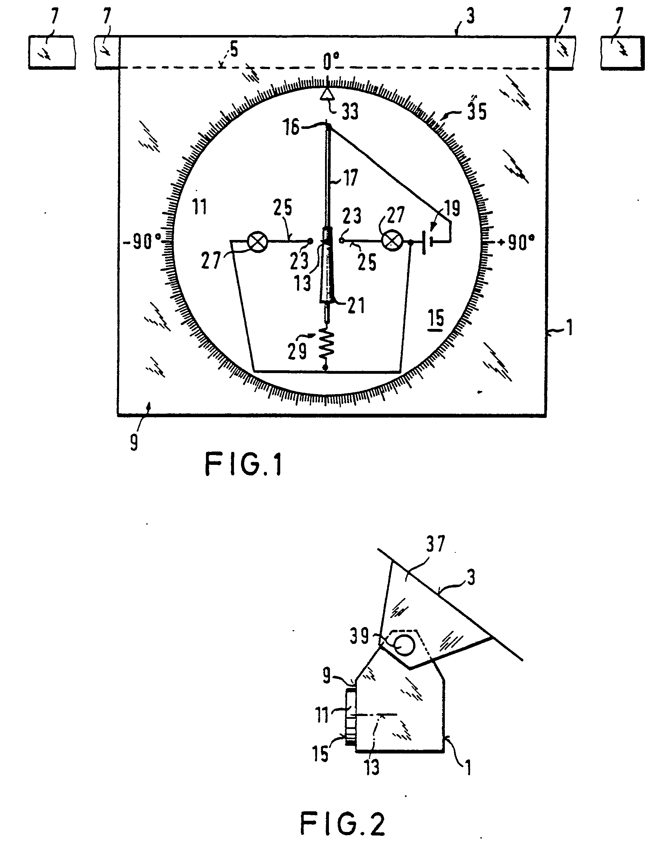

Nachfolgend wird auf Figur 1 Bezug genommen, in der in schematischer Seitenansicht ein elektrisches Winkelmeßgerät gezeigt ist. Das elektrische Winkelmeßgerät umfaßt ein kastenförmiges Gehäuses 1 mit einer oberen Anlagereferenzfläche 3. Um die Genauigkeit beispielsweise bei der Einstellung einer exakten Horizontallage zu erhöhen, kann in der oberen Anlagereferenzfläche 3 eine Längsnut 5 eingebracht sein, in der ein Verlängerungs-Anlagestab 7 in Längsrichtung über das Gehäuse 1 überstehend eingeschoben werden kann. Hierdurch wird am Verlängerungs-Anlagestab 7 ebenfalls eine mit der oberen Ebene des Gehäuses 1 fluchtende Anlagereferenzfläche 3 gebildet.

Quer zur Meßlängsrichtung längs des Verlängerungs-Anlagestabes 7 ist eine über die vordere Gehäuseseite 9 überstehende Meßdose 11 gezeigt, die in dem Gehäuse 1 drehbar gelagert ist und dabei um ihre mittlere Drehachse 13 verdreht werden kann. Die erwähnte Meßdose 11 kann dabei im Inneren des Gehäuses 1 offen gebildet sein.

An der Meßdose 11 ist innenliegend beispielsweise über einen Stift mit der vorderen in Figur 1 gezeigten kreisförmigen Abdeckplatte 15 verbunden ein elektrisch leitendes und sich unter Schwerkraft ausrichtendes Ausrichtglied 17 nach Art eines Pendels bei 16 aufgehängt.

Das Ausrichtglied 17 ist mit dem einen Pol einer Batterie 19 verbunden.

Auf dem vertikal sich ausrichtenden Ausrichtglied 17 ist ein elektrisch leitender Konus 21 aufgedreht, der mit seinen äußeren Mantelflächen zwischen zwei in Figur 1 gezeigten Kontaktgliedern 23 liegt. Die Kontaktglieder 23 sind jeweils über eine Leitung 25 mit einer in der Leitung 25 in Reihe geschalteten Lampe 27 mit dem jeweils anderen Pol der Batterie 19 verbunden. Für die Lampen können Miniaturlämpchen verwendet werden, die beispielsweise über eine 9-Volt-Batterie betrieben werden können.

Darüber hinaus kann noch eine Dämpfungseinrichtung 29 vorgesehen sein, die im gezeigten Ausführungsbeispiel aus einer am unteren Ende des Ausrichtgliedes 17 angreifenden Feder besteht. Es sind aber ebenso andere Dämpfungseinrichtungen, beispielsweise insbesondere im oberen Aufhängpunkt bzw. an der oberen Drehachse des Pendels 17, möglich.

Die vorstehend erläuterten Teile der Meßeinrichtung sind im Inneren der Meßdose 11 bzw. des Gehäuses 1 untergebracht, wobei die Lämpchen zumindest an der Vorderseite der Meßdose 11 sichtbar oder hinter einer entsprechend gegebenenfalls durch Glas oder Kunststoff abgedeckten Öffnung sitzen.

Nachfolgend wird auf die Funktionsweise des elektrischen Winkelmeßgerätes eingegangen.

Soll beispielsweise an der Anlagereferenzfläche 3 eine exakte Horizontallage eingestellt werden, so wird die Meßdose 11 mit ihrem daran befestigten Pfeil 33 auf die Einstellung "0°" eingestellt. Wird nun das elektrische Winkelmeßgerät nicht exakt waagrecht gehalten, so verschwenkt das Ausrichtglied 17 je nach Winkellage leicht zum einen oder anderen Kontaktglied 23, so daß dann die entsprechende Lampe 27 als Anzeigeeinrichtung auflechtet. Das elektrische Winkelmeßgerät kann nunmehr vorsichtig so verdreht werden, bis das unter Gravitationswirkung stehende Ausrichtglied 17 in eine exakte Vertikallage kommt, so daß dann der Konus 21 von dem eben noch berührten Kontaktglied 23 sich entfernt. Nur in dem Fall, daß die Verschwenkung des elektrischen Winkelmeßgerätes zu stark oder zu weit vorgenommen worden ist, würde dann gegebenenfalls die gegenüberliegende Lampe 27 aufleuchten, wodurch angezeigt wird, daß eine Verschwenkung um einen geringen Winkelbereich zurück vorgenommen werden muß. Wenn beide Lämpchen 27 nicht mehr aufleuchten, ist die gewünschte exakte Horizontallage erreicht. Durch Verdrehen des Konusses 21 kann dieser in der Höhe auf dem Ausrichtglied 17 nach oben oder nach unten verdreht werden, wodurch der Abstand zwischen der Mantelfläche des Konusses 21 und den beiden Kontaktgliedern 23 in Neutrallage eingestellt werden kann. Der Abstand kann dabei derart gering gewählt werden, daß sich eine Genauigkeit von ±1° oder ±0,5° oder noch weniger erzielen läßt. Durch die gezeigte Feder läßt sich eine gewisse Dämpfung erzielen. Trotz dieser Feder ergibt sich keine Verfälschung des Meßergebnisses, da der Konus unter Gravitationseinwirkung gleichwohl auch bei Schieflage zum einen oder anderen Kontaktglied 21 leicht verschwenkt werden kann.

Soll beispielsweise nicht eine exakte Horizontallage, sondern eine Lage von beispielsweise 30° eingestellt werden, so wird zunächst die Meßdose 11 durch Verdrehen an ihrem über die vordere Gehäuseseite 9 überstehenden Abschnitt mit ihrem Pfeil 33 auf die Stellung "30°" an der Winkelgradeinteilung 35 verstellt. Danach wird ebenfalls wieder das Winkelmeßgerät so verschwenkt, bis beide Lampen 27 der Anzeigeeinrichtung nicht mehr aufleuchten. Exakt in diesem Falle befindet sich dann die Anlagereferenzfläche 3 in der gewünschten eingestellten Lage von 30° gegenüber der Horizontalen. Daraus ist ersichtlich, daß durch Voreinstellen der Meßdose 11 jede beliebige gewünschte Winkeleinstellung problemlos vorgenommen werden kann. Insbesondere durch die Verwendung der elektrischen Lämpchen eignet sich dieses elektrische Winkeleinstellgerät vor allem auch in dunkleren Räumen, ohne daß erhöhte Aufmerksamkeit von dem Benutzer erforderlich ist.

Umgekehrt kann mit dem elektrischen Winkelmeßgerät aber auch eine vorgegebene Horizontal-, Vertikal- oder andere Winkellage gemessen werden. Dazu wird das elektrische Winkelmeßgerät mit der Anlagereferenzfläche 3 an der gewünschten zu messenden Fläche angelegt. Bei entsprechender Schieflage leuchtet jeweils wieder eines der beiden Lämpchen 27 auf und zeigt dadurch dem Benutzer, ob die Meßdose nach links oder rechts verdreht werden muß. Der Verdrehvorgang an der Meßdose 11 wird so lange durchgeführt, bis beide Lämpchen 27 nicht mehr aufleuchten. Danach kanach an Pfeil 33 wieder die gemessene Winkelgradeinteilung 35 abgelesen werden.

Um den Verstellvorgang an der Meßdose 11 zu erleichtern, können an dem über die vordere Gehäuseseite 9 überstehenden Abschnitt der Meßdose 11 am Außenmantelflächenbereich noch Griffmulden eingebracht sein.

In Figur 2 ist eine Abwandlung zu Figur 1 insoweit gezeigt, als an dem Gehäuse 1 ein Anlageteil 37 mit der oberen Anlagereferenzfläche 3 vorgesehen ist. Das Anlageteil 37 ist dabei um eine im Meßlängsrichtung parallel zur Anlagereferenzfläche 3 liegenden Kippachse 39 gegenüber dem Gehäuse 1 verschwenkbar. Beispielsweise an einem geneigten Dachstuhl besteht dadurch der Vorteil, daß durch entsprechende Verschwenkung des oberen Anlageteiles 37 das an der Kippachse 39 angelenkte Gehäuse 1 der Winkelmeßeinrichtung in Vertikallage gebracht werden kann, so daß problemlos auch an dem geneigten Dachstuhl 41 eine Horizontallinie gebildet werden kann.

Die erwähnte Batterie 19 kann in dem gegenüber dem Gehäuse 1 verschwenkbaren Teil der Meßdose 11 untergebracht sein. Durch eine nicht näher gezeigte vorgesehene entfernbare Abdeckung kann die Batterie 19 ausgewechselt werden. Anstelle des in der Beschreibung erwähnten Gehäuses 1 für das elektrische Winkelmeßgerät kann auch lediglich ein äußerer Gehäuserahmen verstanden werden, in dem die Meßdose 11 um ihre Drehachse 13 verschwenkbar gelagert ist.

Im gezeigten Ausführungsbeispiel ist jeweils für das Ausrichtglied ein Pendel verwendet worden. Möglich ist aber ebenso, daß beispielsweise ein Pendel nach Art einer Triangel verwendet wird und daß an dem unteren horizontal liegenden Querbügel seitlich von der Pendelachse jeweils die beiden dann horizontal zueinander liegenden Kontaktglieder 23 vorgesehen sind. Möglich wären auch andere Einrichtungen als Ausrichtglied nach Art eines Wegebalkens, der sich unter der Gravitationseinwirkung jeweils horizontal einstellt.

Dies gilt gleichermaßen für eine Ausrichtglied, das beispielsweise nach Art eines Schwimmers in einer Flüssigkeit angeordnet ist. Auch hier aber sind die Kontakte jeweils so angeordnet, daß bei einem Verschwenken des Meßgeräteteiles das Ausrichtglied 17 jeweils mit dem einen der beiden Kontakte sofort in Berührung steht und somit anzeigt, daß die eingestellte Winkelgradeinstellung mit der tatsächlichen Lage nicht übereinstimmt.

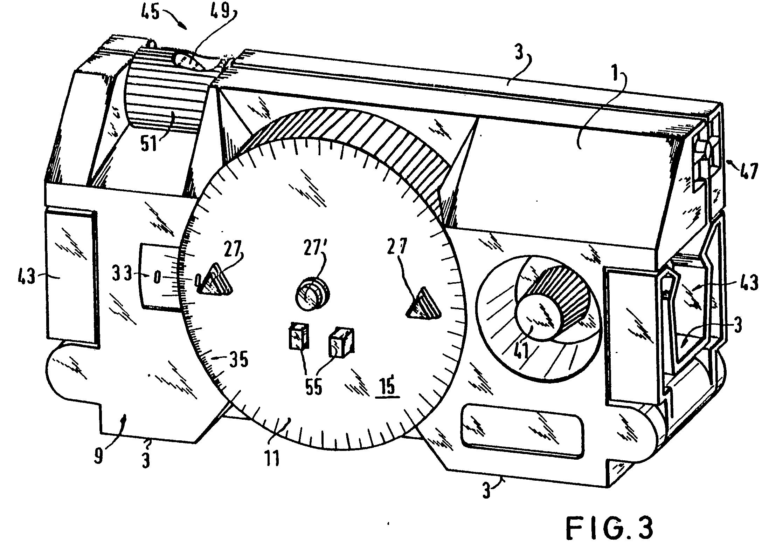

In Figur 3 ist ein weiteres Ausführungsbeispiel eines Winkelmeßgerätes gezeigt, bei dem gleiche Teile mit gleichen Bezugszeichen versehen sind.

Bei diesem Ausführungsbeispiel kann die Meßdose 11 über die am Außenumfang vorgesehene Riffelung problemlos auf eine bestimmte gewünschte Winkellage eingestellt werden. Über einen zusätzlichen Drehknopf 41 kann eine Feinjustierung vorgenommen werden. Der Antrieb der Meßdose 11 erfolgt dabei über den Drehknopf 41 über ein beipsielsweise nicht mehr gezeigtes zwischengeschaltetes Rad oder Zahnrad.

Seitlich sind U-förmige Bügel 43 vorgesehen, die um 180° nach unten umgeklappt und auf eine Meßlatte aufgesteckt werden können. Die Meßlatte ragt dabei zwischen die inneren Teile der Doppelschenkel des U-Bügels 43. Der Abstand der inneren Schenkel der U-förmigen Bügel 43 entspricht dabei der Dicke der gängigen Meßlatten von beispielsweise 2 cm.

Ferner ist eine optische Peileinrichtung 45 vorgesehen. Sie umfaßt im oberen Teil des Gehäuses 1 einen Kanal, an dessen rechten Ende eine Fadenkreuzeinrichtung 47 sitzt. Über einen an der gegenüberliegenden Seite vorgesehenen zur Meßrichtung schräg geneigten, beispielsweise 45° geneigt eingestellten Spiegel 49 kann durch die Längsrichtung des optischen Kanals hindurchgesehen werden. Dadurch läßt sich bei entsprechender Justierung der elektronischen Waage auch im entfernten Abstand ein bestimmter Punkt festlegen. Umgekehrt aber auch kann ein bestimmter Punkt beispielsweise durch Einschlagen eines Nagels markiert werden, wobei im Abstand hiervon nunmehr bei eingestellter Winkellage, beispielsweise Horizontallage, der Winkelmesser solange angehoben und abgesenkt wird, bis der Nagel genau in der Fadenkreuzeinrichtung 47 erscheint.

Dazu kann ferner eine weitere Fadenkreuzeinrichtung an der gegenüberliegenden Seite, aber nach dem Spiegel 49, im optischen Kanal eingebaut sein.

Um die optische Peilvorrichtung noch leichter handhabbar zu machen, ist der Spiegel 49 in einer Hülse 51 um die Meßrichtung herum, also in Längsrichtung des Kanals, verschwenkbar, so daß über den Spiegel 49 nicht mehr von oben her—wie in Figur 3 gezeigt ist—, sondern von jeder anderen beliebigen Richtung etwa quer zur Längsrichtung des Gerätes über den Spiegel 49 eine Peilung vorgenommen werden kann.

In der elektronischen Wasserwaage sind die Anzeigelämpchen 27 beispielsweise in Form eines Dreieckes ausgebildet und zeigen je nach Aufleuchten an, auf welcher Seite die Wasserwaage "hängt" und zur Herstellung der eingestellten Winkellage leicht angehoben werden muß. Wird die gewünschte endgültige Winkellage erreicht, gehen—wie beschrieben—diese Anzeigenlämpchen 27 aus. Im Ausführungsbeispiel nach Figur 3 leuchtet in dieser Stellung dann eine mittlere weitere Lampe 27' auf, die das Erreichen der gewünschten Endlage anzeigt.

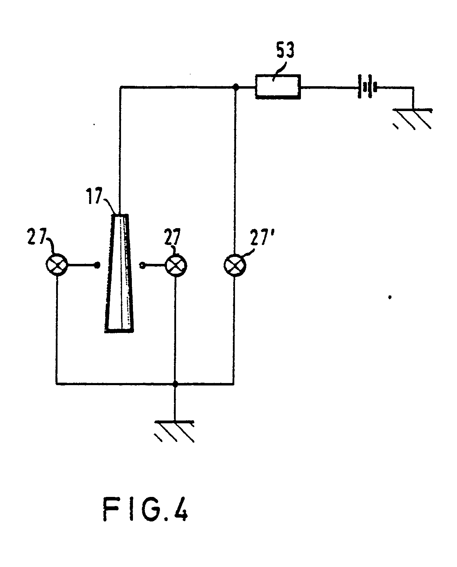

Dazu kann eine geeignete elektrische Schaltung vorgesehen sein. Ein Beispiel hierfür zeigt Figur 4. Das die "richtige Endlage" anzeigende Lämpchen 27' ist hierbei parallel zu den anderen Anzeigelämpchen 27 geschaltet, die einen geringeren Widerstand aufweisen. Sobald eines der beiden Lämpchen 27 aufleuchtet, ist der Spannungsabfall an den die richtige "Endlage" anzeigenden Lämpchen 27' so groß, daß dieses Lämpchen nicht leuchtet. Nur dann, wenn die beiden anderen Lämpchen 27 bei Erreichen der gewünschten Endlage ausgehen, dann liegt die gesamte Spannung am Widerstand des Lämpchens 27' an, das dann aufleuchtet. Durch einen in Reihe geschalteten Widerstand 53 läßt sich dies erreichen.

Bei Verwendung von LED's läßt sich dies einfach dann Erreichen, wenn die Lämpchen 27 aus roten und das Lämpchen 27' aus einem grünen LED besteht. Denn bei dem grünen Lämpchen 27' ist der Widerstand größer. Ansonsten wäre auch möglich das Lämpchen 27' mit einem weiteren Vorwiderstand in der Reihe zu den anderen Lämpchen 27 zu schalten, so daß hierdurch immer gewährleistet ist, daß das Lämpchen 27' nur bei unterbrochenen Kontakt zu den Lämpchen 27 aufleuchtet kann.

Ferne ist in Figur 3 noch ein Ein-/Ausschalter 55 nach Art eines Kippschalters an der Meßdose 11 vorgesehen, durch welchen das elektrische Winkelmeßgerät ein- und ausgeschaltet werden kann.

Ferner wird angemerkt, daß natürlich eine kinematische Umkehrung insoweit ebenso möglich ist, wonach beispielsweise das Pendel 17 einen gabelförmigen Kontakt umfaßt, der ein zwischen den gabelförmig vorstehenden Kontaktelementen befindliches Kontaktglied 23 aufweist. Auch in diesem Falle kann entsprechend der Breite der gabelförmigen Ausnehmung des Pendels 17 dieses Pendel nur bis maximal zu diesem Wert winkelig verschwenkt werden, bis nämlich das entsprechende Kontaktelement 23 innenliegend an der einen oder anderen gegenüberliegenden Kontaktfläche anstößt.

Auch hier können am Pendel Leitungen so angeschlossen sein, daß jeweils eines von zwei Lämpchen 27 je nach der Winkellage aufleuchten. Aber auch in diesem Falle kann der mittlere zwischen dem gabelförmig bzw. topfförmig auslaufenden Pendel befindliche Kontakt als "Doppelkontakt" interpretiert werden, da das dann als "Einzelkontakt" zu verstehende Pendel einmal auf der linken bzw. auf der rechten Seite des dazwischen befindlichen hineinragenden Kontaktelementes anstößt. Weitere entsprechende Abwandlungen sind denkbar.

**Patentansprüche**

1. Winkelmeßgerät mit einem unter Gravitationseinwirkung sich selbst ausrichtenden, in einem vorgegebenen begrenzten Bereich verschwenkbaren Ausrichtglied (17)—insbesondere einem außerhalb seines Schwerpunktes aufgehängten Pendel—mit einer mit einem Gehäuse (1) verbundenen Anlagereferenzfläche (3) mit einem quer zur Längsrichtung der Anlagereferenzfläche (3) drehbar gelagerten und in seinem Winkelbereich einstellbaren Meßgeräteteil (11) und mit einer elektrisch über zwei zusammenwirkende Kontaktglieder (23, 21) betätigbaren Anzeigeeinrichtung (27), wobei das Ausrichtglied (17) mit dem einen Kontaktglied (21) und das drehbar gelagerte Meßgeräteteil (11) mit dem anderen Kontaktglied (23) versehen und eines der beiden zusammenwirkenden Kontaktglieder (23, 21)—vorzugsweise das dem Meßgeräteteil (11) zugeordnete—als Kontaktgliederpaar (23) ausgebildet und so angeordnet ist, daß außerhalb der Ausgangshorizontal- bzw. Ausgangsvertikallage des Ausrichtgliedes (17) das eine Kontaktglied (21) jeweils mit einem der beiden anderen Kontaktglieder (23) des Kontaktgliederpaares in Wechselwirkung steht, wodurch ein Anzeigeinstrument (27) der Anzeigeeinrichtung betätigbar ist, dadurch gekennzeichnet, daß zur Veränderung der Meßgenauigkeit der Abstand zwischen dem Ausrichtglied (17) und dem damit zusammenwirkenden Kontaktglied (23) über ein Verstellglied, z.B. eines Konusses 21, einstellbar ist.

2. Winkelmeßgerät nach Anspruch 1, dadurch gekennzeichnet, daß das Verstellglied aus einem in seiner Lage veränderbaren Konus (21) besteht, über welchen der Abstand zwischen dem Ausrichtglied (17) und dem damit zusammenwirkenden Kontaktglied (23) veränderbar ist.

3. Winkelmeßgerät nach Anspruch 1 oder 2, dadurch gekennzeichnet, daß das Ausrichtglied (17) mit einem verstellbaren Konus (21) als Kontaktglied versehen ist, über welches der Abstand zu dem jeweligen Kontaktglied (23) einstellbar ist.

4. Winkelmeßgerät nach einem der Ansprüche 1 bis 3, dadurch gekennzeichnet, daß das eine Kontaktglied (21) mit dem einen Pol und das jeweils andere Kontaktglied (23) über eine Leitung (25) und einer in der Leitung (25) angeordneten Lampe (27) für die Anzeigeeinrichtung mit dem jeweils anderen Pol einer Spannungsversorgung (19) direkt verbunden ist.

5. Winkelmeßgerät nach einem der Ansprüche 1 bis 4, dadurch gekennzeichnet, daß dessen Anzeigeeinrichtung (27) eine dritte Lampe (27') umfaßt, welche nach Erlöschen der beiden ersten Lampen (27) nach Erreichen der vorbestimmten Winkelendlage aufleuchtet, daß die zur ersten oder zweiten Lampe (27) parallel geschaltete und bei Erreichen der gewünschten Winkelendlage aufleuchtende dritte Lampe (27') einen größeren Innenwiderstand als die beiden ersten Lampen (27) der Anzeigeeinrichtung derart aufweist, und daß bei zugeschalteter erster oder zweiter Lampe (27) der Spannungsabfall an der parallel geschalteten dritten Lampe (27') bis unter einen Aufleuchten verhindernden Grenzwert abfällt.

6. Winkelmeßgerät nach Anspruch 5, dadurch gekennzeichnet, daß das bzw. die elektrischen Anzeigeelement(e) in Form je einer Lampe (27, 27') aus Lumineszenzdioden (LED) besteht bzw. bestehen.

7. Winkelmeßgerät nach einem der Ansprüche 1 bis 6, dadurch gekennzeichnet, daß die Anlagereferenzfläche (3) um eine parallel zu der Meßlängsrichtung verlaufende Kippachse (39) verschwenkbar ist.

8. Winkelmeßgerät nach einem der Ansprüche 1 bis 7, dadurch gekennzeichnet, daß das Meßgeräteteil (11) in regelmäßigen Winkelabständen, vorzugsweise alle 90°, mit einer spürbaren Rasteinstellung versehen ist.

9. Winkelmeßgerät nach einem der Ansprüche 1 bis 8, dadurch gekennzeichnet, daß die der Anzeige dienenden Lampen (27, 27') an der sichtbaren verschwenkbaren Abdeckplatte (15) des Meßgeräteteiles (11) vorgesehen sind.

10. Winkelmeßgerät nach Anspruch 9, dadurch gekennzeichnet, daß das Ausrichtglied (17) zwischen den beiden Kontaktgliedern (23) in einem Winkelbereich von weniger als ±1°, vorzugsweise von weniger als ±1/2°, verschwenkbar ist.

11. Winkelmeßgerät nach einem der Ansprüche 1 bis 10, dadurch gekennzeichnet, daß für das Ausrichtglied (17) eine Dämpfungseinrichtung (29) vorgesehen ist.

12. Winkelmeßgerät nach einem der Ansprüche 1 bis 11, dadurch gekennzeichnet, daß das Meßgeräteteil (11) über die vordere Gehäuseseite (9) nach Art einer Meßdose axial überstehend ausgebildet ist.

13. Winkelmeßgerät nach Anspruch 12, dadurch gekennzeichnet, daß an dem über die vordere Gehäuseseite (9) überstehenden Abschnitt des nach Art einer Meßdose ausgebildeten Meßgeräteteils (11) Griffabschnitte, z.B. Griffmulden, vorgesehen sind.

14. Winkelmeßgerät nach einem der Ansprüche 1 bis 13, dadurch gekennzeichnet, daß die Anlagereferenzfläche (3) aus U-förmigen, auf eine Meßlatte aufsteckbaren Bügeln (43) besteht.

15. Winkelmeßgerät nach Anspruch 14, dadurch gekennzeichnet, daß die U-förmigen Bügel (43) am Gehäuse (1)—vorzugsweise stirnseitig gegenüberliegend—herausschiebbar und/oder vom Boden um 90° und/oder an der Stirnseite des Gehäuses (1) um 180° umklappbar sind.

16. Winkelmeßgerät nach einem der Ansprüche 1 bis 15, dadurch gekennzeichnet, daß ferner eine optische Peilvorrichtung (45) in Meßlängsrichtung vorgesehen ist.

17. Winkelmeßgerät nach Anspruch 16, dadurch gekennzeichnet, daß die optische Peilvorrichtung (45) einen zur Meßlängsrichtung in der optischen Achse geneigt liegenden Spiegel (49) und eine oder zwei im Abstand vorgesehene Fadenkreuzeinrichtung(en) (47) umfaßt.

18. Winkelmeßgerät nach Anspruch 16 oder 17, dadurch gekennzeichnet, daß der geneigt angeordnete Spiegel (49) um die Meßlängsrichtung verschwenkbar ist.

**Revendications**

1. Appareil de mesure angulaire comportant un élément mobile (17), en particulier un pendule suspendu en un point situé en dehors de son centre de gravité, se positionnant de lui-même sous l'effet de la pesanteur et oscillant dans un espace limité prédéfini; une surface d'appui de référence (3) reliée à un boîtier (1); un organe de mesure (11) monté transversalement au sens longitudinal de la surface d'appui de référence (3) de manière à pouvoir tourner par rapport au boîtier (1) et être réglé dans une position angulaire choisie; et un dispositif indicateur électrique (27) actionné par deux éléments de contact (23, 21) agissant l'un sur l'autre, l'élément mobile (17) étant pourvu d'un des éléments de contact (21) et l'organe de mesure tournant (11) de l'autre élément de contact (23) et un des deux éléments de contact (23, 21) agissant l'un sur l'autre, de préférence celui de l'organe de mesure (11), étant constitué d'une paire d'éléments de contact (23) disposés de telle sorte qu'en dehors de la position horizontale ou verticale de départ de l'élément mobile (17), un des éléments de contact (21) se trouve chaque fois en interaction avec un des deux autres éléments de contact (23) de la paire d'éléments de contact et actionne un indicateur (27) du dispositif indicateur, caractérisé en ce que la distance entre l'élément mobile (17) et l'élément de contact (23) sur lequel il agit peut être ajustée au moyen d'un élément de réglage, par exemple un cône 21, de manière à modifier la précision de mesure.

2. Appareil de mesure angulaire suivant la revendication 1, caractérisé en ce que l'élément de réglage est constitué par un cône (21) dont la position peut être modifiée de façon à ajuster la distance entre l'élément mobile (17) et l'élément de contact (23) sur lequel il agit.

3. Appareil de mesure angulaire suivant la revendication 1 ou 2, caractérisé en ce que l'élément mobile (17) est pourvu d'un cône réglable (21) servant d'élément de contact, au moyen duquel la distance entre l'élément mobile (17) et l'élément de contact (23) correspondant peut être ajustée.

4. Appareil de mesure angulaire suivant une des revendications 1 à 3, caractérisé en ce qu'un des éléments de contact (21) est relié directement à un des pôles d'une source de courant (19) et en ce que chacun des autres éléments de contact (23) est relié à l'autre pôle de la source de courant (19), au moyen d'une ligne (25) et d'une lampe (27) montée dans la ligne (25) et destinée au dispositif indicateur.

5. Appareil de mesure angulaire suivant une des revendications 1 à 4, caractérisé en ce que son dispositif indicateur (27) comprend une troisième lampe (27'), laquelle s'allume après extinction des deux premières lampes (27) lorsque la position angulaire finale prédéterminée est atteinte, en ce que la troisième lampe (27') raccordée en parallèle à la première ou à la deuxième lampe (27) et s'allumant lorsque la position angulaire finale prédéterminée est atteinte, présente une résistant interne supérieure à celle des deux premières lampes (27) du dispositif indicateur, et en ce que la tension à la troisième lampe (27') raccordée en parallèle tombe sous une valeur seuil empêchant son allumage, lorsque la première ou la deuxième lampe (27) est allumée.

6. Appareil de mesure angulaire suivant la revendication 5, caractérisé en ce que chacun des éléments indicateurs électriques présentant la forme d'une lampe (27, 27') est constitué par une diode électroluminescente (DEL).

7. Appareil de mesure angulaire suivant une des revendications 1 à 6, caractérisé en ce que la surface d'appui de référence (3) peut tourner autour d'un axe de basculement (39) parallèle au sens longitudinal de mesure.

8. Appareil de mesure angulaire suivant une des revendications 1 à 7, caractérisé en ce que l'organe de mesure (11) est pourvu de crans de calage perceptibles à distances angulaires régulières, de préférence tous les 90°.

9. Appareil de mesure angulaire suivant une des revendications 1 à 8, caractérisé en ce que les lampes (27, 27') servant d'indicateurs sont prévues sur le couvercle tournant visible (15) de l'organe de mesure (11).

10. Appareil de mesure angulaire suivant la revendication 9, caractérisé en ce que l'élément mobile (17) oscille entre les deux éléments de contact (23) selon un angle inférieur à plus ou moins 1°, de préférence inférieur à plus ou moins 0,5°.

11. Appareil de mesure angulaire suivant une des revendications 1 à 10, caractérisé en ce qu'un dispositif amortisseur (29) est prévu pour l'élément mobile (17).

12. Appareil de mesure angulaire suivant une des revendications 1 à 11, caractérisé en ce que l'organe de mesure (11) dépasse axialement de la face avant (9) du boîtier (1) à la manière d'une boîte de mesure.

13. Appareil de mesure angulaire suivant la revendication 12, caractérisé en ce qu'il est prévu des parties striées, par exemple des stries d'adhérence, sur la partie de l'organe de mesure (11) dépassant de la face avant (9) du boîtier (1) à la manière d'une boîte de mesure.

14. Appareil de mesure angulaire suivant une des revendications 1 à 13, caractérisé en ce que la surface d'appui de référence (3) est constituée par des étriers en U (43) pouvant être emboîtés sur une règle graduée.

15. Appareil de mesure angulaire suivant la revendication 14, caractérisé en ce que les étriers en U (43), prévus de préférence de chaque côté du boîtier (1), peuvent coulisser hors de celui-ci et/ou être rabattus de 90° par rapport à sa base et/ou de 180° par rapport à ses côtés.

16. Appareil de mesure angulaire suivant une des revendications 1 à 15, caractérisé en ce qu'il est encore prévu un dispositif de relèvement optique (45) dans le sens longitudinal de mesure.

17. Appareil de mesure angulaire suivant la revendication 16, caractérisé en ce que le dispositif de relèvement optique (45) comporte un miroir (49) disposé dans l'axe optique de manière incliné dans le sens longitudinal de mesure et un ou deux réticules (47) prévu(s) à une certaine distance.

18. Appareil de mesure angulaire suivant la revendication 16 ou 17, caractérisé en ce que le miroir (49) disposé de manière inclinée peut tourner dans le sens longitudinal de mesure.

**Claims**

1. Angle measuring device with an alignment member (17) aligning itself under the effect of gravity and pivotable in a predetermined limited area—in particular a pendulum suspended outwith its center of gravity—with a position reference surface (3) connected with a housing (1) with a measuring device part (11) mounted pivotally at right angles to the longitudinal direction of the position reference surface (3) and adjustable in its angular region and with an indicator unit (27) which can be actuated electrically by means of two co-operating contact members (23, 21), whereby the alignment member (17) is provided with the one contact member (21) and the pivotally mounted measuring device part (11) is provided with the other contact member (23) and one of the two co-operating contact members (23, 21)—preferably the one allocated to the measuring device part (11)—is designed as a pair of contact members (23) and is arranged in such a way that, outwith the initial horizontal position or initial vertical position of the alignment member (17), the one contact member (21) interacts in each case with one of the other two contact members (23) of the pair of contact members, whereby an indicator instrument (27) of the indicator unit is actuated, characterised in that in order to adjust the accuracy of measurement the distance between the alignment member (17) and the contact member (23) co-operating with the latter can be adjusted by means of an adjustment member, for example a cone (21).

2. Angle measuring device according to claim 1, characterised in that the adjustment member consists of a cone (21) adjustable in its position, by means of which the distance between the alignment member (17) and the contact member (23) co-operating with it can be adjusted.

3. Angle measuring device according to claim 1 or 2, characterised in that the alignment member (17) is provided with an adjustable cone (21) as contact member by means of which the distance to the respective contact member (23) can be adjusted.

4. Angle measuring device according to any one of claims 1 to 3, characterised in that the one contact member (21) is directly connected with the one pole and the other contact member (23) with the other pole of a voltage supply (19) by means of a cable (25) and a lamp (27) arranged in the cable (25) for the indicator unit.

5. Angle measuring device according to any one of claims 1 to 4, characterised in that the indicator unit (27) of the latter includes a third lamp (27') which—after the first two lamps (27) have been extinguished after the predetermined angle end position has been reached—lights up, in that the third lamp (27'), connected in parallel to the first or second lamp (27) and lighting up when the desired angle end position is reached, has a greater internal resistance than the first two lamps (27) of the indicator unit and in that in the case of the first or second lamp (27) being switched on the voltage drop on the third lamp (27') connected in parallel drops to below a threshold value preventing lighting.

6. Angle measuring device according to claim 5, characterised in that the electrical indicator element(s) in the form of a lamp (27, 27') in each case consist(s) of light-emitting diodes (LED).

7. Angle measuring device according to any one of claims 1 to 6, characterised in that the position reference surface (3) is pivotable about a trunnion axis (39) running parallel to the longitudinal direction of measurement.

8. Angle measuring device according to any one of claims 1 to 7, characterised in that the measuring device part (11) is provided at regular angular distances, preferably every 90°, with a noticeable alignment notch.

9. Angle measuring device according to any one of claims 1 to 8, characterised in that the lamps (27, 27') serving as indicators are provided on the visible pivotable cover plate (15) of the measuring device part (11).

10. Angle measuring device according to claim 9, characterised in that the alignment member (17) is pivotable between the two contact members (23) in an angular region of less than ±1°, preferably of less than ±1/2°.

11. Angle measuring device according to any one of claims 1 to 10, characterised in that a damping device (29) is provided for the alignment member (17).

12. Angle measuring device according to any one of claims 1 to 11, characterised in that the measuring device part (11) is designed projecting axially over the front housing side (9) in the manner of a graduated cylinder.

13. Angle measuring device according to claim 12, characterised in that grip sections, for example grip recesses are provided on the section of the measuring device part designed in the manner of a graduated cylinder projecting over the front housing side (9).

14. Angle measuring device according to any one of claims 1 to 13, characterised in that the position reference surface (3) consists of U-shaped stirrups (43) which can be fixed onto a gauge rod.

15. Angle measuring device according to claim 14, characterised in that the U-shaped stirrups (43) on the housing (1) can be pushed out—preferably lying opposite with respect to the front side—and/or can be folded back from the base by 90° and/or on the front side of the housing (1) by 180°.

16. Angle measuring device according to one of claims 1 to 15, characterised in that an optical direction finder is further provided in the longitudinal direction of measurement.

17. Angle measuring device according to claim 16, characterised in that the optical direction finder (45) comprises a mirror (49) lying inclined to the longitudinal axis of measurement in the optical axis and one or two cross hairs device(s) (47) provided at a distance.

18. Angle measuring device according to claim 16 or 17, characterised in that the mirror (49) that is arranged inclined is pivotable about the longitudinal direction of measurement.

FIG.1

FIG.2

FIG.3

FIG.4